Europäisches Patentamt

European Patent Office

Office européen des brevets

(19)

(11) Veröffentlichungsnummer: **0 090 062**
**B1**

(12) # EUROPÄISCHE PATENTSCHRIFT

(45) Veröffentlichungstag der Patentschrift:
04.02.87

(51) Int. Cl.⁴: **H 01 G 7/02, D 01 D 5/00**

(21) Anmeldenummer: 82102620.0

(22) Anmeldetag: 29.03.82

(54) Verfahren und Vorrichtung zur Herstellung von Elektret-Filamenten, -Spinnfasern oder dergleichen.

(43) Veröffentlichungstag der Anmeldung:
05.10.83 Patentblatt 83/40

(45) Bekanntmachung des Hinweises auf die Patenterteilung:
04.02.87 Patentblatt 87/6

(84) Benannte Vertragsstaaten:
DE FR GB IT NL

(56) Entgegenhaltungen:
DE-A-1 951 749
DE-A-2 512 885
DE-A-2 752 110
DE-A-2 904 170

Béla von Falkei, Synthesefasern, Verlag Chemie,
1981, Seiten 90, 91, 93, 108, 109

(73) Patentinhaber: RHODIA AG, Engesserstrasse 8
Postfach 1320, D-7800 Freiburg (DE)

(72) Erfinder: Stoll, Martin, Grünlandstrasse 3, D-7801
Freiburg- Hochdorf (DE)
Erfinder: Kliemann, Bruno, Alban- Stolz- Strasse 30,
D-7800 Freiburg (DE)

EP 0 090 062 B1

**Beschreibung**

Die Erfindung betrifft ein Verfahren zur Herstellung von Elektret-Filamenten, -Spinnfasern oder Bändchen aus hochmolekularen fadenbildenden Substanzen durch Schmelzen dieser hochmolekularen fadenbildenden Substanzen und Auspressen dieser geschmolzenen Substanzen durch Düsenöffnungen, elektrisches Aufladen, entweder mit negativem oder mit positivem Vorzeichen, und elektrisches Polarisieren zur Erzeugung eines von den gebildeten Filamenten, Spinnfasern oder Bändchen ausgehenden stabilen elektrischen Feldes und Abkühlen der gebildeten Filamente, Spinnfasern oder Bändchen.

Die Erfindung betrifft außerdem eine Vorrichtung zur Durchführung des Verfahrens.

Aus der DE-A- 27 52 110 ist ein Verfahren zur Herstellung eines Elektreten bekannt, nach dem man ein Polymer vom Styroltyp in Form einer Schicht zwischen zwei Glasplatten legt und 1 min bis 5 min lang eine Gleichspannung von etwa 20 kV bis 60 kV anlegt.

Ferner ist aus der US-A- 3 571 679 eine Vorrichtung zur Herstellung von Elektreten aus Nichtleitern mit offener oder poröser Struktur bekannt. Die Vorrichtung besteht aus zwei Metallelektroden, zwischen denen ein elektrisches Feld aufgebaut werdenkkann und zwischen die das nichtleitende Material, beispielsweise in Form eines Filtervlieses aus Polyäthylenterephthalatfasern, aus dem ein Elektret gebildet werden soll, gebracht werden kann.

In der US-A- 3 996 916 ist ein Verfahren zur Herstellung eines mit einer elektrischen Ladung versehenen faserförmigen Filters, dessen Fasermaterial aus einer hochmolekularen nicht-polaren Substanz besteht, beschrieben. Das Verfahren besteht darin, daß man

a) einen Film bzw. eine Folie aus beispielsweise polypropylen mit einer Geschwindigkeit von 12,2 m/min zuführt,

b) diese Folie in zwei Stufen verstreckt,

c) die Folie unter Erwärmung auf mindestens einer Seite mit Hilfe von mehreren Koronaentladungselementen mit einer elektrischen Homoladung versieht,

d) die elektrischegeladene Folie fibrilliert bzw. zerfasert,

e) das Fasermaterial sammelt und

f) aus dem gesammelten Fasermaterial ein Filter bildet.

Ferner beschreibt die FR-A- 2 416 535 ein Verfahren zur Herstellung eines Elektreten in Form eines Faservlieses. Das Verfahren ist dadurch gekennzeichnet, daß

a) ein faserbildendes Material mit einem spezifischen Leitungswiderstand von mindestens $10^{14}$ Ω cm (gemeint ist wohl: "... mit einem spezifischen elektrischen Widerstand von $10^{14}$ Ω cm...") schmelzgesponnen wird, wobei auf das Material nach dessen Austritt aus den Düsenöffnungen ein Gasstrom hoher Geschwindigkeit einwirkt, wodurch dieses Material Verstreckt wird und so Fasern gebildet werden,

b) die gebildeten Fasern in noch plastischem Zustand mit elektrisch geladenen Teilchen beschossen werden, und zwar dicht unterhalb der Düsenöffnungen und

c) die Fasern gesammelt werden, wenn sie genügend abgekühlt sind.

Als faserbildendes Material wird beispielsweise Polypropylen genannt.

In der US-A- 2 740 154 ist die Herstellung von elektrisch geladenen Fäden, Geweben und dergleichen zur Verwendung in u. a. Filtern beschrieben. Man legt dabei die Fäden oder das Gewebe zwischen zwei elektrische Heizelemente oder läßt sie zwischen diesen durchlaufen. Durch Einschalten der Heizelemente erfolgt eine Erwärmung und damit eine Erweichung der Fäden oder des Gewebes. Danach wird mit Hilfe der Heizelemente, die gleichzeitig als Elektroden dienen, eine elektrische Ladung auf die Fäden oder auf das Gewebe aufgebracht; diese werden danach unter dem Einfluß des elektrostatischen Feldes abgekühlt; Fäden, Gewebe und dergleichen können beispielsweise aus Polystyrol, Äthylcellulose oder Vinylpolymeren bestehen.

Nachteilig ist bei einigen dieser bekannten Verfahren und vorrichtungen jedoch, daß die Elektroden, mit deren Hilfe eine elektrische Ladung auf die zu beladenden Gebilde, wie Folien, Fäden, Gewebe etc., aufgebracht wird, zumeist nicht unmittelbar an diesen Gebilden anliegen und insbesondere bei einer - üblicherweise angestrebten - kontinuierlichen Arbeitsweise zwangsläufig nicht in unmittelbarer Berührung mit diesen Gebilden gebracht werden können. Zwischen Elektroden und elektrisch zu beladenden Gebilden besteht also ein Zwischenraum, in dem sich zumeist Luft befindet. Als Folge davon muß man zur Elektret-Bildung eine höhere Spannung bzw. eine höhere elektrische Feldstärke anlegen als in dem Fall, bei dem die Elektroden in direktem Kontakt mit den zu beladenden Gebilden stehen.

Von Nachteil ist bei den bekannten Verfahren und Vorrichtungen ferner, daß nach bzw. mit ihnen zumeist nur auf bzw. in die äußere Schicht der elektrisch zu beladenden Gebilde eine elektrische Ladung auf- bzw. eingebracht werden kann; ein Einbringen einer elektrischen Ladung in das Innere der Gebilde, die zu Elektreten umgewandelt werden sollen, ist mit den bekannten Methoden nur schwer möglich.

Von Nachteil ist bei den bekannten Verfahren und Vorrichtungen zur Herstellung von Elektret-Filamenten oder -Spinnfasern, daß eine richtige Dosierung und Zentrierung der elektrischen Ladungen sehr schwierig ist. Dieses trifft insbesondere zu für das in der französischen Patentanmeldung Nr. 2 416 535 beschriebene Verfahren, da dort mit hohen Geschwindigkeiten gearbeitet wird und sehr feine Fasern, also Fasern niedrigen Titers, gebildet werden.

Bei der Herstellung von Elektreten wird das Aufbringen der elektrischen Ladung auf die elektrisch zu beladendan Gebilde und die elektrische polarisierung der zu polarisierenden Gebilde vorzugsweise bei erhöhter Temperatur vorgenommen, d. h., daß man diese Gebilde erhitzen muß. Bei den meisten bekannten

2

Methoden zur Elektret-Herstellung ist nun noch von Nachteil, daß ma die erhöhte Temperatur, die für die Formgebung der zu beladenden bzw. zu polarisierenden Gebilde wie Filamente oder Spinnfasern, notwendig ist, nicht ausnützen kann; man geht dort von bereits fertigen Gebilden aus, die man kurz vor oder während der Aufbringung der elektrischen Ladung bzw. der elektrischen polyrisierung wiedererwärmt. Lediglich bei dem in der FR-A Nr. 2 416 535 beschriebenem Verfahren nutzt man die für das Schmelzspinnen notwendige Wärme - zumindest teilweise - auch zur Elektret-Herstellung aus; allerdings wird dort die elektrische Ladung auch erst auf die bereits gebildeten Fasern, die zwar noch plastisch, jedoch - verglichen mit dem Zustand innerhalb der Spinndüse - bereits erheblich abgekühlt sind, aufgebracht.

Der Erfindung liegt die Aufgabe zugrunde, ein Verfahren zur Herstellung von Elektret-Filamenten, -Spinnfasern oder -Bändchen zu schaffen, mit dem die Nachteile der bekannten Verfahren vermieden werden.

Diese Aufgabe wird erfindungsgemäß gelöst durch ein Verfahren zur Herstellung von Elektret-Filamenten, -Spinnfasern oder -Bändchen aus hochmolekularen fadenbildenden Substanzen durch Schmelzen dieser hochmolekularen fadenbildenden Substanzen und Auspressen dieser geschmolzenen Substanzen durch Düsenöffnungen, elektrisches Aufladen, entweder mit negativem oder mit positivem Vorzeichen, und elektrisches Polarisieren zur Erzeugung eines von den gebildeten Filamenten, Spinnfasern oder Bändchen ausgehenden stabilen elektrischen Feldes und Abkühlen der gebildeten Filamente, Spinnfasern oder Bändchen, dadurch gekennzeichnet, daß das elektrische Aufladen, entweder mit negativem oder mit positivem Vorzeichen, und das elektrische Polarisieren zur Erzeugung eines von den gebildeten Filamenten, Spinnfasern oder Bändchen ausgehenden stabilen elektrischen Feldes unmittelbar vor dem Austritt der hochmolekularen fadenbildenden Substanzen aus den Düsenöffnungen an diesen sich dann in geschmolzenem Zustand befindlichen hochmolekularen fadenbildenden Substanzen vorgenommen wird.

Eine bevorzugte Ausführungsform des erfindungsgemäßen Verfahrens ist dadurch gekennzeichnet, daß jedes bzw. jede der gebildeten Filamente, Spinnfasern oder Bändchen unmittelbar nach seinem bzw. ihrem Austritt aus der Düsenöffnung einem elektrischen Feld ausgesetzt wird, das auf die in bzw. auf den Filamenten, Spinnfasern oder Bänbchen vorhandenen Träger einer elektrischen Ladung eine Kraft senkrecht und in Richtung zur jeweiligen Längsachse der Filamente, Spinnfasern oder Bändchen ausübt.

Bevorzugt werden die gebildeten Filamente, Spinnfasern oder Bändchen dabei gleichzeitig abgekühlt.

Der Erfindung liegt auch die Aufgabe zugrunde, eine Vorrichtung zur Durchführung des erfindungsgemäßen Verfahrens zu schaffen.

Zur Lösung dieser Aufgabe wird eine Vorrichtung vorgeschlagen mit einer Einrichtung zum Schmelzen der hochmolekularen fadenbildenden Substanzen, mit einer Düse mit Düsenöffnungen, mit einer Einrichtung zum elektrischen Aufladen und Polarisieren und mit einer Anordnung zum Abkühlen der gebildeten Filamente, Spinnfasern oder Bändchen, gekennzeichnet durch folgende Merkmale:

1. die Einrichtung zum elektrischen Aufladen und Polarisieren besteht

1.1 entweder aus einer mit einer Spitze oder mit mehreren Spitzen versehenen Elektrode, die abgesehen von ihrer Spitze bzw. ihren Spitzen mit einem elektisch isolierenden und gegenüber den innerhalb der Düse herrschenden Bedingungen stabilen Material überzogen bzw. umgeben ist, wobei jeweils eine Spitze innerhalb der Düse unmittelbar vor einer Düsenöffnung angebracht ist oder in eine Düsenöffnung hineinragt, und wobei ferner die Elektrode mit einem Ausgang einer elektrischen Energiequelle verbunden, und der andere Ausgang dieser elektrischen Energiequelle mit Erde verbunden ist,

1.2. oder aus einer mit einer Spitze oder mit mehreren Spitzen versehenen Elektrode, die vollständig mit einem elektrisch isolierenden und gegenüber den innerhalb der Düse herrschenden Bedingungen stabilen Material überzogen bzw. umgeben ist, wobei jeweils eine Spitze innerhalb der Düse unmittelbar vor einer Düzenöffnung angebracht ist oder in eine Düsenöffnung hineinragt, und aus einer nicht mit einem elektrisch isolierenden Material überzogenen bzw. umgebenen und innerhalb der Düse nicht unmittelbar vor den Düsenöffnungen angebrachten oder in die Düsenöffnungen hineinragenden Gegenelektrode, wobei die elektrisch isolierte Elektrode mit dem einen Ausgang einer elektrischen Energiequelle und die elektrisch nicht isolierte Gegenelektrode mit dem anderen Ausgang dieser elektrischen Energiequelle verbunden sind, und wobei ferner der Ausgang der elektrischen Energiequelle, mit dem die elektrisch isolierte Elektrode verbunden ist, auch mit Erde verbunden ist,

2. die Düsenplatte, in der sich die Düsenöffnungen befinden, oder die gesamte Düse besteht

2.1. entweder aus einem elektrisch isolierenden und gegenüber den innerhalb der Düse herrschenden Bedingungen stabilen Material

2.2. oder aus einem elektrisch leitenden und gegenüber den innerhalb der Düse herrschenden Bedingungen stabilen Material, wobei

2.2.1. die Düsenplatte oder die gesamte Düse dann gegenüber Erde elektriech isoliert ist.

Eine bevorzugte Ausführungsform der erfindungsgemäßen Vorrichtung ist dadurch gekennzeichnet, daß sich auf der Austrittsseite der Düse direkt anschließend an jede Düsenöffnung und achszentriert mit dieser, jedoch ohne in unmittelbarem Kontakt mit der Düse stehend, jeweils ein aus elektrisch leitendem Material bestehender Hohlzylinder befindet, wobei diese Hohlzylinder mit einem Ausgang einer elektrischen Energiequelle verbunden sind und wobei ferner der andere Ausgang der elektrischen Energiequelle mit Erde verbunden ist. Bevorzugt sind dabei die sich auf der Austrittsseite der Düse befindlichen Hohlzylinder so ausgebildet, daß sie gleichzeitig als Anordnung zum Abkühlen der gebildeten Filamente, Spinnfasern oder Bändchen dienen.

Unter hochmolekularen fadenbildenden Substanzen sollen im Rahmen der Erfindung solche verstanden werden, die schmelzgesponnen werden können. Für diese Zwecke der Erfindung eignen sich beispielsweise folgende:

Polyäthylenterephthalat

Polyäthylen

Polypropylen

Polyvinylchlorid

Polyvinylacetat

Polyvinylidenfluorid

Polymethylmethacrylat

Polystyrol

Celluloseacetat

und Mischungen dieser Polymeren.

Bevorzugt werden diejenige hochmolekularen fadenbildenden Substanzen verwendet, die einen spezifischen elektrischen Widerstand von mindestens $10^{16}\,\Omega$ cm besitzen.

Einige Ausführungsbeispiele der Erfindung werden nachstehend anhand der schematischen Zeichnungen näher erläutert. Es zeigt:

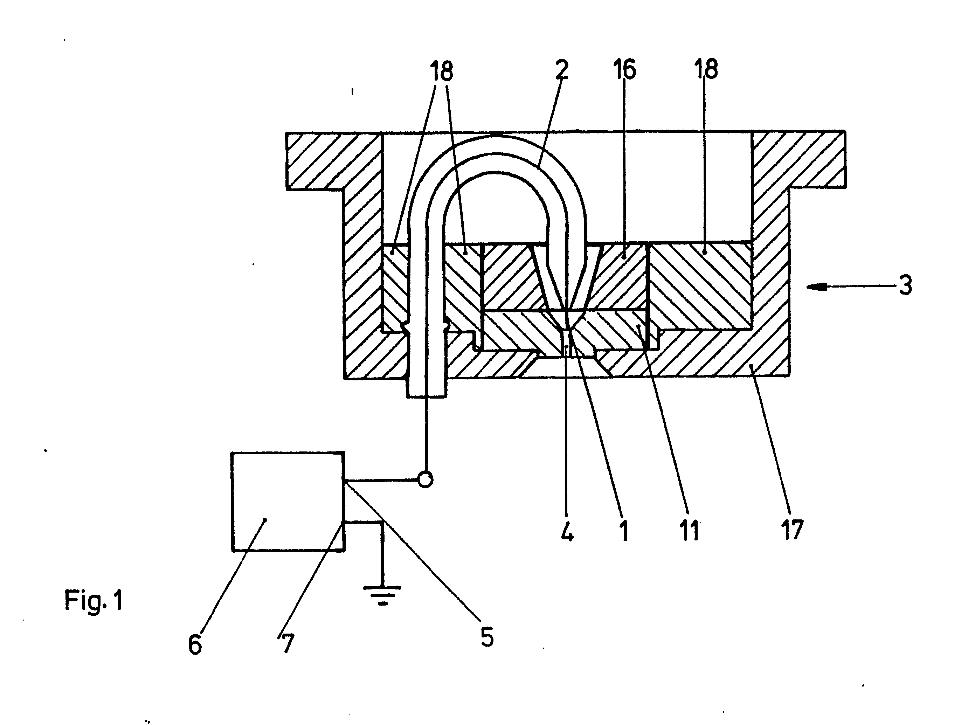

Fig. 1 die Darstellung einer Düse und einer Einrichtung zum elektrischen Aufladen, entweder mit negativem oder mit positivem Vorzeichen, und zum elektrischen Polarisieren im Schnitt; die in dieser Darstellung gezeigte Einrichtung zum elektrischen Aufladen und zum elektrischen Polarisieren besteht aus der mit einer Spitze 1 versehenden Elektrode 2, die abgesehen von ihrer Spitze 1 mit einem elektrisch isolierenden und gegenüber den innerhalb der Düse 3 herrschenden Bedingungen stabilen Material überzogen bzw. umgeben ist, wobei die Spitze 1 innerhalb der Düse 3 unmittelbar vor der Düsenöffnung 4 angebracht ist,

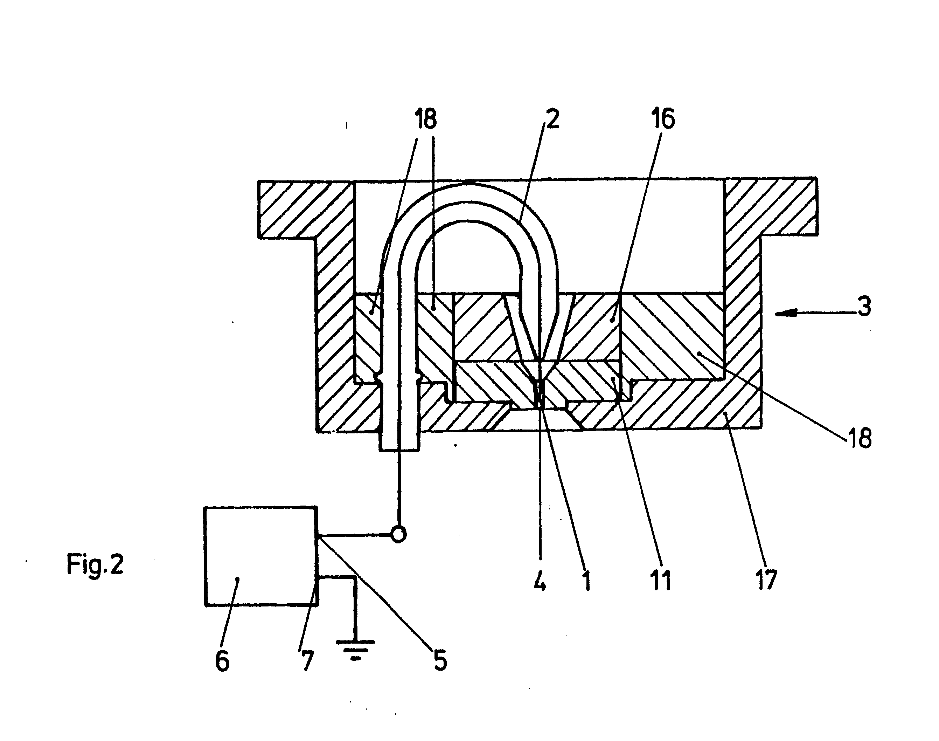

Fig. 2.die Darstellung einer Düse und einer Einrichtung zum elektrischen Aufladen, entweder mit negativem oder mit positivem Vorzeichen, und zum elektrischen Polarisieren im Schnitt; die in dieser Darstellung gezeigte Einrichtung zum elektrischen Aufladen und zum elektrischen Polarisieren besteht aus der mit einer Spitze 1 versehenen Elektrode 2, die abgesehen von ihrer Spitze 1 mit einem elektrisch isolierenden und gegenüber den innerhalb der Düse 3 herrschenden Bedingungen stabilen Material überzogen bzw. umgeben ist, wobei hier die Spitze 1 innerhalb der Düse 3 in die Düsenöffnung hineinragt,

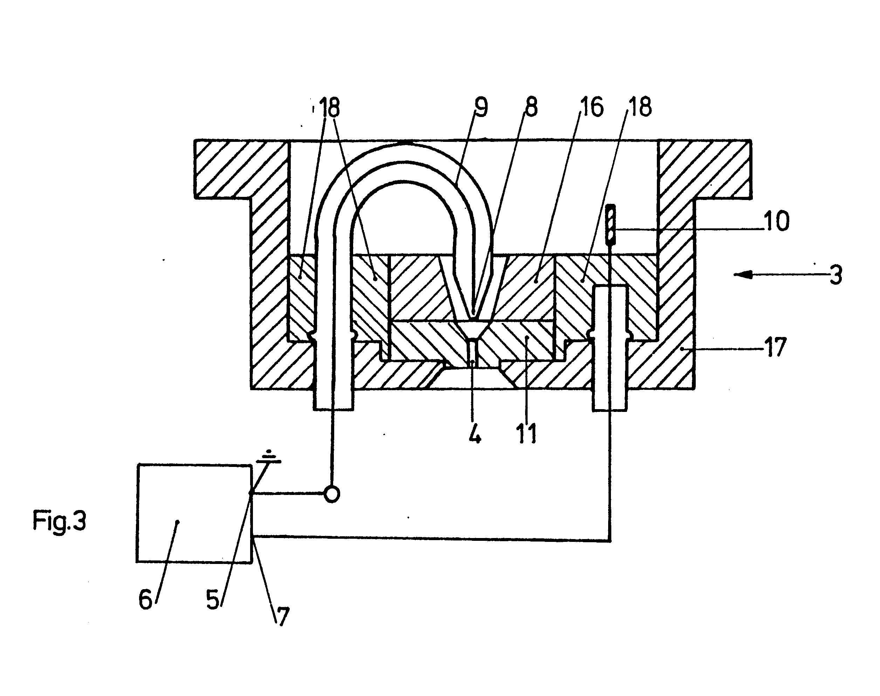

Fig. 3 die Darstellung einer Düse und einer Einrichtung zum elektrischen Aufladen, entweder mit negativem oder mit positivem Vorzeichen, und zum elektrischen Polarisieren im Schnitt; die in dieser Darstellung gezeigte Einrichtung zum elektrischen Aufladen und zum elektrischen Polarisieren besteht aus der mit einer Spitze 8 versehenen Elektrode 9, die vollständig mit einem elektrisch isolierenden und gegenüber den innerhalb der Düse 3 herrechenden Bedingungen stabilen Material überzogen bzw. umgeben ist, wobei die Spitze 8 innerhalb der Düse 3 unmittelbar vor der Düsenöffnung 4 angebracht ist, und aus der nicht mit einem elektrisch isolierenden Material überzogen bzw. umgebenen und innerhalb der Düse 3 nicht unmittelbar vor der Düsenöffnung 4 angebrachten oder in die Düsenöffnung 4 hineinragenden Gegenelektrode 10,

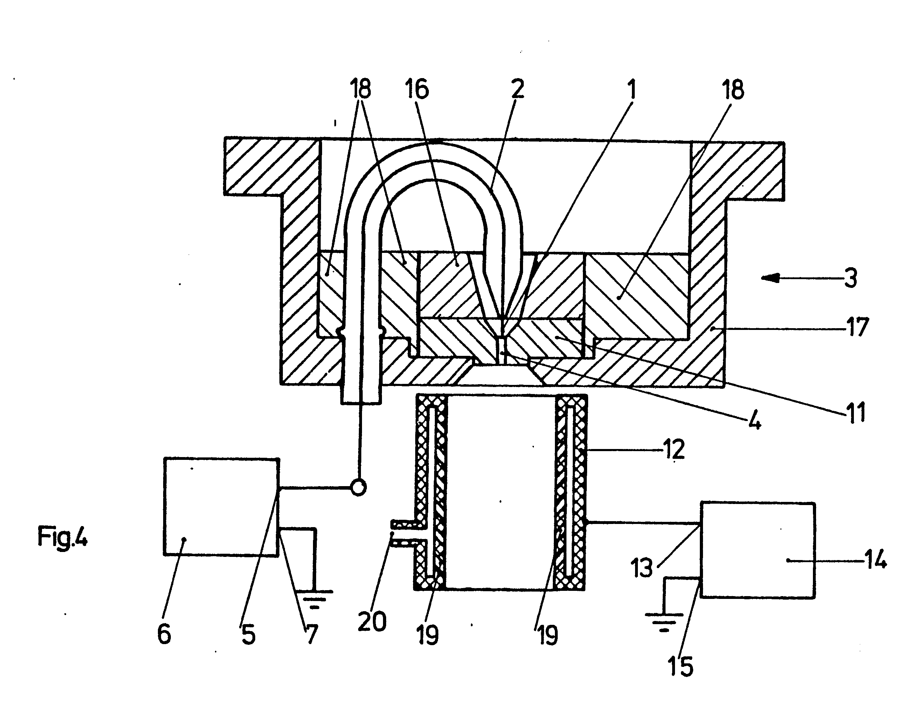

Fig. 4 die Darstellung einer Düse, einer Einrichtung zum elektrisches Aufladen, entweder mit negativem oder mit positivem Vorzeichen, und zum elektrischen Polarisieren und eines aus elektrisch leitendem Material bestehenden Hohlzylinders; die in dieser Darstellung gezeigte Einrichtung zum elektrischen Aufladen und zum elektrischen Polarisieren entspricht der in Fig. 1 gezeigten und der gezeige Hohlzylinder 12 befindet sich auf der Austrittsseite der Düse 3 direkt anschließend an die Düsenöffnung 4 und achszentriert mit dieser, ohne jedoch in unmittelbarem Kontakt mit der Düse 3 zu stehen,

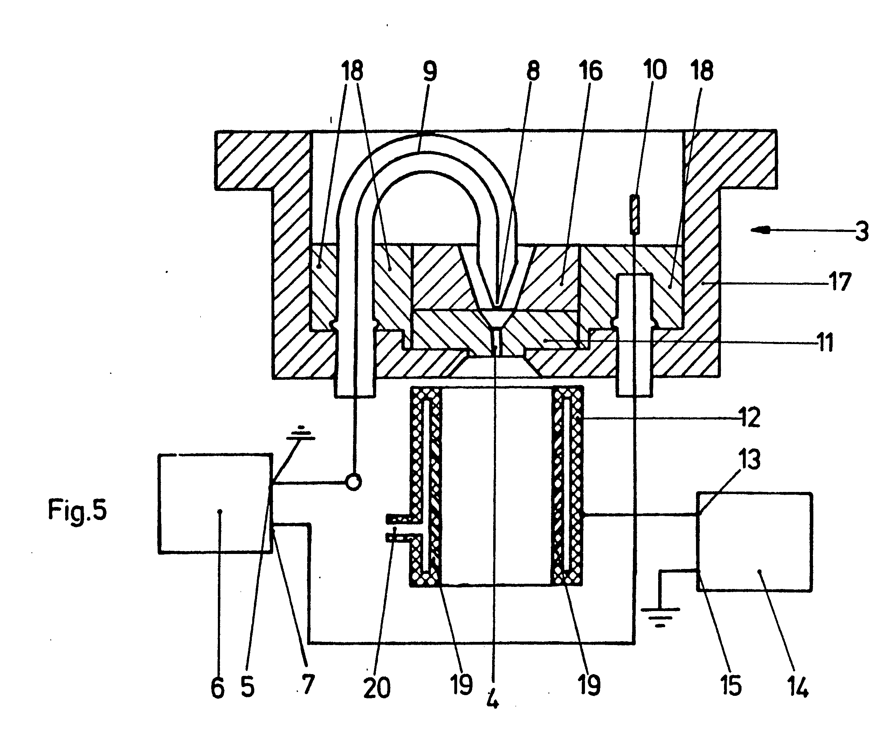

Fig. 5 die Darstellung einer Düse, einer Einrichtung zum elektrischen Aufladen, entweder mit negativem oder mit positivem Vorzeichen, und zum elektrischen Polarisieren und eines aus elektrisch leitendem Material bestehenden Hohlzylinders; die in dieser Darstellung gezeigte Einrichtung zum elektrischen Aufladen und zum elektrischen Polarisieren entspricht der in Fig. 3 gezeigten und der gezeigte Hohlzylinder und dessen Anordnung entsprechen denen der Fig. 4.

Zur Durchführung des erfindungsgemäßen Verfahrens wurde ein Spindelextruder des Typs LSE der Firma Fourné, Bonn, Bundesrepublik Deutschland, verwendet, an dem jeweils eine Düse nach Fig, 1, 3 oder 4 angesetzt war.

Die jeweiligen Elektroden und die jeweiligen Hohlzylinder waren über Zuleitungskabel mit erdfreien und kurzschlußsicheren Gleichepannung-Hochspannungsgeneratoren als elektrische Energiequellen verbunden.

Für alle Beispiele gilt ferner: Während des Spinnvorgangs betrug der Druck an der Förderschnecke des Extruders 40 bar und der Druck an der Düse 70 bar; die Düsentemperatur war 290°C. Der Durchmesser des Düsenloches 4 betrug 0,3 mm; das Düsenloch 4 war rund.

Die ersponnenen Filamente wurden jeweils mit Hilfe einer Aufwickeleinrichtung auf eine Hülse aus Melaminharz aufgewickelt. Die Aufwickelgeschwindigkeit betrug 200 m/min.

**Beispiel 1**

Am Extruder war eine Düse gemäß Fig. 1 angesetzt.

Die Elektrode 2 dieser Düse 3 war über ein Zuleitungskabel mit dem negativen Pol eines erdfreien und kurzschlußsicheren Gleichspannungs Hochspannungsgenerators 6 verbunden. Der positive Pol dieses Hochspannungsgeneratore 6 war mit Erde verbunden.

Die Düse 3 nach Fig. 1 und auch der Extruder waren gegenüber Erde elektrisch isoliert.

Die Düsenplatte 11 nach Fig. 1 bestand aus Quarzglas. Der Einlauftrichter 16 nach Fig. 1 bestand aus Messing. Die Elektrode 2 nach Fig. 1 bestand aus einem massiven Kupferdraht und war abgesehen von ihrer Spitze 1 mit einem Rohr aus Quarzglas umgeben.

Zur festen Verbindung der Düsenplatte 11 mit dem Einlauftrichter 16, zur festen Verbindung des Düsenplattenhalters 17 mit der Düsenplatte 11, zur Abdichtung des Endes des die Elektrode 2 umgebenden Quarzglas-Rohres unmittelbar vor der Spitze 1 dieser Elektrode 2 sowie zur Abdichtung der Stelle, an der das die Elektrode 2 umgebende Quarzglas-Rohr in die Düse 3 eintritt, wurde Sauereisen-Zement Nr. 8 der Firma Sepp Zeug KG, Böblingen-Tannenberg, Bundesrepublik Deutschland, verwendet. Mit diesem Zement war auch der Raum 18 innerhalb der Düse 3 - bis zum Rand des Einlauftrichters 16 - ausgegossen und somit abgedichtet.

Der Extruder wurde mit zusatzfreiem Polypropylen-Granulat gefüllt und aufgeheizt. Nach Erreichen der Düsentemperatur von 290° C wurde mit dem Ausspinnen eines Elektret-Filaments begonnen. Dazu wurde der Hochspannungsgenerator eingeschaltet und die Elektrode 2 für die Dauer von 45 Minuten mit einer Spannung von -3,8 kV (= Kilovolt) versehen; danach wurde die Elektrode 2 für die Dauer von weiteren 45 Minuten mit einer Spannung von -2,0 kV versehen.

Das aus der Düse austretende Filament wurde durch einen Kühlschacht, der gegenüber Erde elektrisch isoliert war, geführt und dort durch Anblasen mit Luft von 20° C abgekühlt.

Es wurde mit -3,8 kV und mit -2,0 kV Spannung jeweils ein Polypropylen-Elektret-Filament erhalten; deren in nC (= Nanocoulomb) ausgedrückte Elektretladungen $Q_E$ und deren in nC/g (= Nanocoulomb/Gramm) ausgedrückte massebezogene Elektretladungen $Q_E$/Masse - jeweils in Abhängigkeit von der Lagerzeit - sind in Tabelle 1 aufgeführt.

**Tabelle 1**

| Lagerzeit nach dem Spinnen in Tagen (d) | Spannung an der Elektrode -3,8 kV | | Spannung an der Elektrode -2,0 kV | |
|---|---|---|---|---|
| | $Q_E$ (nC) | $Q_E$/Masse (nC/g) | $Q_E$ (nC) | $Q_E$/Masse (nC/g) |
| 0 | 5,4 | 0,30 | 4,0 | 0,20 |
| 2 | 4,3 | 0,20 | 2,3 | 0,11 |
| 7 | 3,4 | 0,17 | 3,0 | 0,15 |
| 15 | 3,4 | 0,17 | 3,7 | 0,19 |
| 30 | 4,6 | 0,23 | 4,3 | 0,21 |
| 90 | 5,1 | 0,26 | 3,7 | 0,18 |
| 150 | 5,7 | 0,28 | 3,4 | 0,17 |
| 370 | 6,3 | 0,31 | 4,0 | 0,20 |

**Beispiel 2**

Es wurde die gleiche Anlage wie in Beispiel 1 verwendet. Auch die Arbeitsweise war wie in Beispiel 1, jedoch wurde der Extruder statt mit Polypropylen-Granulat mit zusatzfreiem Polyäthylenterephthalat-Granulat gefüllt.

Die Elektrode 2 wurde für die Dauer von 45 Minuten mit einer Spannung von -3,0 kV und für die Dauer von weiteren 45 Minuten mit einer Spannung von -5,0 kV versehen. Danach wurde umgepolt, d. h., die Elektrode 2 der Düse 3 wurde - über ein Zuleitungskabel - mit dem positivem Pol des - erdfreien und kurzschlußsicheren - Gleichspannung-Hochspannungsgenerators verbunden und der negative Pol dieses Hochspannungsgenerators wurde mit Erde verbunden. Dann wurde die Elektrode für die Dauer von 45 Minuten mit einer Spannung von +4,0 kV versehen.

Es wurde mit -3,0 kV, mit -5,0 kV und mit +4,0 kV Spannung jeweils ein Polyäthylenterephthalat-Elektret-Filament erhalten; deren in nC/g ausgedrückte massebezogene Elektretladungen $Q_E$/Masse - jeweils in Abhängigkeit von der Lagerzeit - sind in Tabelle 2 aufgeführt.

**Tabelle 2**

| Lagerzeit nach dem Spinnen (d) | Spannung an der Elektrode -3,0 kV $Q_E$/Masse (nC/g) | Spannung an der Elektrode -5,0 kV $Q_E$/Masse (nC/g) | Spannung an der Elektrode +4,0 kV $Q_E$/Masse (nC/g) |
|---|---|---|---|
| 0 | 0,57 | 0,68 | 0,14 |
| 2 | 0,34 | 0,46 | 0,09 |
| 7 | 0,28 | 0,31 | 0,06 |
| 15 | 0,23 | 0,28 | 0,06 |
| 30 | 0,20 | 0,28 | 0,03 |
| 60 | 0,20 | 0,28 | 0,01 |

**Beispiel 3**

Am Extruder war eine Düse gemäß Fig. 4 angesetzt. Diese Düse 3 und die Elektrode 2 waren die gleichen wie die in Beispiel 1.

Die Elektrode 2 dieser Düse 3 war über ein Zuleitungskabel mit dem negativen Pol eines erdfreien und kurzschlußsicheren Gleichstrom-Hochspannungsgenerators 6 verbunden. Der positive pol dieses Hochspannungsgenerators war mit Erde verbunden.

Die Düse 3 nach Fig. 4 und auch der Extruder waren gegenüber Erde elektrisch isoliert.

Auf der Austrittsseite der Düse 3 und 20 cm von ihr entfernt befand sich ein Hohlzylinder 12 so, daß das Filament nach dessen Austritt aus der Düsenöffnung 4 in der Mitte dieses Hohlzylinders durch ihn hindurchtrat.

Der Hohlzylinder 12 bestand aus einem 10 cm langen Doppelmantel-Rohr aus Stahl, dessen innere Wandung mit von der Düse 3 weggerichteten Schrägbohrungen 19 versehen war. Der Außendurchmesser des Hohlzylinders 12 betrug 5 cm, der Innendurchmesser 1 cm.

Der Hohlzylinder 12 hatte eine Zuleitung 20 für ein Kühlgas und trug an der dieser Zuleitung 20 gegenüberliegenden Seite einen Anschluß, mit dem der Hohlzylinder 12 über ein Zuleitungskabel mit dem negativen Pol eines erdfreien und kurzschlußsicheren Gleichstrom-Hochspannungsgenerators 14 verbunden war. Der positive Pol dieses Hochspannungsgenerators 14 war mit Erde verbunden. Der Hohlzylinder 12 war gegenüber Erde elektrisch isoliert.

Der Extruder wurde mit zusatzfreiem Polyäthylenterephthalat-Granulat gefüllt und aufgeheizt. Nach Erreichen der Düsentemperatur von 290° C wurde mit dem Ausspinnen eines Elektret-Filaments begonnen. Dazu wurde der Hochspannungsgenerator 6 eingeschaltet und die Elektrode 2 für die Dauer von 45 Minuten mit einer Spannung von -3,0 kV versehen; danach wurde die Elektrode 2 für die Dauer von weiteren 45 Minuten mit einer Spannung von -5,0 kV versehen. Gleichzeitig wurde der Hohlzylinder 12 durch Einschalten des Hochspannungsgenerators 14 mit einer Spannung von -0,75 kV versehen. Während des Spinnvorgangs strömte über die Zuleitung 20 für Kühlgas durch den Hohlzylinder 12 Kaltluft von 2 bis 5° C, der aus den Schrägbohrungen 19 des Hohlzylinders austrat und so das gebildete Filament abkühlte. Das aus der Düse austretende Filament wurde danach noch durch einen Kühlschacht, der gegenüber Erde elektrisch isoliert war, geführt und dort durch Anblasen mit Luft von 20° C noch weiter abgekühlt.

Es wurde mit -3,0 kV und mit -5,0 kV Spannung an der Elektrode 2 jeweils ein Polyäthylenterephthalat-Elektret-Filament erhalten; deren in nC/g ausgedrückte massebezogene Elektretladungen $Q_E$/masse - jeweils in Abhängigkeit von der Lagerzeit - sind in Tabelle 3 aufgeführt.

**Tabelle 3**

| Lagerzeit nach dem Spinnen (d) | Spannung an der Elektrode -3,0 kV $Q_E$/Masse (nC/g) | Spannung an der Elektrode -5,0 kV $Q_E$/Masse (nC/g) |
|---|---|---|
| 0 | 1,54 | 2,14 |
| 2 | 1,28 | 1,57 |
| 4 | 0,86 | 1,14 |
| 6 | 0,71 | 0,86 |
| 8 | 0,57 | 0,74 |

7

**Tabelle 3 (Forts.)**

| Lagerzeit nach dem Spinnen (d) | Spannung an der Elektrode -3,0 kV $Q_E$/Masse (nC/g) | Spannung an der Elektrode -5,0 kV $Q_E$/Masse (nC/g) |
|---|---|---|
| 10 | 0,46 | 0,68 |
| 20 | 0,40 | 0,63 |
| 30 | 0,40 | 0,63 |
| 60 | 0,34 | 0,57 |

**Beispiel 4**

Es wurde die gleiche Anlage wie in Beispiel 3 verwendet. Auch die Arbeitsweise war wie in Beispiel 3, jedoch wurde der Extruder statt mit Polyäthylenterephthalat-Granulat mit zusatzfreiem Polypropylen-Granulat gefüllt.

Auch die Elektrode 2 wurde mit einer anderen Spannung versehen, nämlich für die Dauer von 45 Minuten mit -3,2 kV. Danach wurde umgepolt, d. h., die Elektrode 2 der Düse 3 wurde - über ein Zuleitungskabel - mit dem positiven Pol des - erdfreien und kurzschlußsicheren - Gleichstrom-Hochspannungsgenerators 6 verbunden und der negative pol dieses Hochspannungsgenerators wurde mit Erde verbunden. Dann wurde die Elektrode für die Dauer von 45 Minuten mit einer Spannung von +3,2 kV versehen. In gleicher Weise wurde mit dem Hohlzylinder 12 verfahren 1 Für die ersten 45 Minuten Spinnens wurde er vom - erdfreien und kurzschlußsicheren-Gleichstrom-Hochspannungsgenerator 14 mit einer Spannung von -0,75 kV versehen. Danach wurde auch dort umgepolt, d. h., der Hohlzylinder 12 wurde - über ein Zuleitungskabelmit dem positiven Pol des - erdfreien und kurzschlußsicheren Gleichstrom-Hochspannungsgenerators 14 verbunden und der negative Pol dieses Hochspannungsgenerators wurde mit Erde verbunden. Für die weiteren 45 Minuten Spinnens wurde der Hohlzylinder 12 dann mit einer Spannung von +0,75 kV versehen.

Es wurde mit -3,2 kV und mit +3,2 kV Spannung an der Elektrode 2 jeweils ein Polypropylen-Elektret-Filament erhalten; deren in nC/g ausgedrückte massebezogene Elektretladungen $Q_E$/Masse - jeweils in Abhängigkeit von der Lagerzeit - sind in Tabelle 4 aufgeführt.

Tabelle 4

| Lagerzeit nach dem Spinnen (d) | Spannung an der Elektrode -3,2 kV $Q_E$/Masse (nC/g) | Spannung an der Elektrode +3,2 kV $Q_E$/Masse (nC/g) |
|---|---|---|
| 0 | 1,71 | 1,02 |
| 2 | 1,14 | 0,11 |
| 4 | 0,86 | 0,06 |
| 6 | 0,71 | 0,06 |
| 8 | 0,68 | 0,06 |
| 10 | 0,63 | 0,09 |
| 20 | 0,57 | 0,09 |
| 30 | 0,51 | 0,11 |
| 60 | 0,51 | 0,11 |

**Beispiel 5**

Am Extruder war eine Düse gemäß Fig. 3 angesetzt. Die Elektrode 9 dieser Düse 3 war über ein Zuleitungskabel mit dem positiven Pol eines erdfreien und kurzschlußsicheren Gleichstrom-Hochspannungsgenerators 6 verbunden. Die Gegenelektrode 10 der Düse 3 war über ein Zuleitungskabel mit dem negativen Pol dieses Hochspannungsgenerators verbunden. Außerdem war der positive Pol des Hochspannungsgenerators 6 auch mit Erde verbunden.

Die Düse 3 nach Fig. 3 und auch der Extruder waren gegenüber Erde elektrisch isoliert.

Die Düsenplatte 11 bestand aus Quarzglas. Der Einlauftrichter 16 nach Fig. 3 bestand aus Messing. Die Elektrode 9 nach Fig. 3 bestand aus einem massiven Kupferdraht und war einschließlich ihrer Spitze 8 mit einem Rohr aus Quarzglas umgeben. Die Gegenelektrode 10 bestand aus einem 0,25 cm großen Kupferplättchen, das auf einen massiven Kupferdraht, der nur an seiner Eintrittsstelle in die Düse 3 mit einem Rohr aus Quarzglas umgeben war, aufgelötet war.

Zur festen Verbindung der Düsenplatte 11 mit dem Einlauftrichter 16 zur festen Verbindung des Düsenplattenhalters 17 mit der Düsenplatte 11, zur Abdichtung der Stelle, an der das die Elektrode 9 umgebende Quarzglas-Rohr in die Düse eintritt, zur Abdichtung des den massiven Kupferdraht der Gegenelektrode 10 umgebenden Rohres aus Quarzglas sowie zur Abdichtung der Stelle, an der das den massiven Kupferdraht der Gegenelektrode 10 umgebende Quarzglas-Rohr in die Düse eintritt, wurde ebenfalls Sauereisen-Zement Nr. 8 der Firma Sepp Zeug KG, Böblingen-Tannenberg, Bundesrepublik Deutschland, verwendet. Mit diesem Zement war auch der Raum 18 innerhalb der Düse 3 ausgegossen und somit abgedichtet.

Der Extruder wurde mit zusatzfreiem Polyäthylenterephthalat-Granulat gefüllt und aufgeheizt. Nach Erreichen der Düsentemperatur von 290° C wurde mit dem Ausspinnen eines Elektret-Filaments begonnen. Dazu wurde der Hochspannungsgenerator eingeschaltet und die Gegenelektrode 10 für die Dauer von 45 Minuten mit einer Spannung von -4,0 kV versehen.

Das aus der Düse 3 austretende Filament wurde durch einen Kühlschacht, der gegenüber Erde elektrisch isoliert war, geführt und dort durch Anblasen mit Luft von 20°C abgekühlt.

Es wurde ein Polyäthylenterephthalat-Elektret-Filame halten; dessen in nC/g ausgedrückte massebezogene Elektretladungen $Q_E$/Masse - jeweils in Abhängigkeit von der Lagerzeit - sind in Tabelle 5 aufgeführt.

**Tabelle 5**

| Lagerzeit nach dem Spinnen (d) | $Q_E$/Masse (nC/g). |
|---|---|
| 0 | 0,23 |
| 2 | 0,18 |
| 10 | 0,14 |
| 20 | 0,11 |
| 30 | 0,14 |
| 60 | 0,16 |
| 100 | 0,10 |
| 200 | 0,09 |
| 300 | 0,10 |

**Beispeil 6**

Es wurde die gleiche Anlage wie in Beispiel 5 verwendet. Auch die Arbeitsweise war wie in Beispiel 5, jedoch war die Elektrode 9 der Düse 3 über ein Zuleitungskabel mit dem negativen Pol des - erdfreien und kurzschlußsicheren Gleichstrom-Hochspannungsgenerators verbunden, wobei dieser negative Pol auch mit Erde verbunden war. Ferner war die Gegenelektrode 10 der Düse 3 über ein Zuleitungskabel mit dem positiven Pol dieses Hochspannungsgenerators verbunden. Die Gegenelektrode 10 wurde für die Dauer von 45 Minuten Spinnens mit einer Spannung von +4,0 kV versehen.

Es wurde ein Polyäthylenterephthalat-Elektret-Filament erhalten; dessen in nC/g ausgedrückte massebezogene Elektretladungen $Q_E$/Masse - jeweils in Abhängigkeit von der Lagerzeit - sind in Tabelle 6 aufgeführt.

Tabelle 6

| Lagerzeit nach dem Spinnen (d) | $Q_E$/Masse (nC/g) |
|---|---|
| 0 | 0,11 |
| 1 | 0,07 |
| 3 | 0,05 |
| 10 | 0,11 |
| 20 | 0,10 |
| 30 | 0,12 |
| 60 | 0,09 |
| 100 | 0,05 |

**Beispiel 7**

Es wurde die gleiche Anlage wie in Beispiel 5 verwendet. Auch die Arbeitsweise war wie in Beispiel 5, jedoch wurde der Extruder statt mit Polyäthylenterephthalat-Granulat mit zusatzfreiem Polypropylen-Granulat gefüllt.

Die Elektrode 9 der Düse 3 war über ein Zuleitungskabel mit dem positiven Pol des - erdfreien und kurzschlußsicheren - Gleichstrom-Hochspannungsgenerators verbunden. Der positive Pol dieses Hochspannungsgenerators war auch mit Erde verbunden. Die Gegenelektrode 10 der Düse 3 war über ein Zuleitungskabel mit dem negativen Pol des Hochspannungsgenorators verbunden. Die Gegenelektrode 10 wurde für die Dauer von 45 Minuten Spinnens mit einer Spannung von -2,0 kV versehen. Danach wurde umgepolt, d. h., die Elektrode 9 der Düse 3 wurde - über ein Zuleitungskabel - mit dem negativen Pol des - erdfreien und kurzschlußsicheren - Gleichstrom-Hochspannungsgenerators verbunden, wobei dieser negative Pol auch mit Erde verbunden wurde. Ferner wurde die Gegenelektrode 10 der Düse 3 - über ein Zuleitungskabel - mit dem positiven Pol dieses Hochspannungsgenerators verbunden. Die Gegenelektrode 10 wurde dann für die Dauer von 45 Minuten Spinnens mit einer Spannung von +2,0 kV versehen.

Es wurde jeweils ein Polypropylen-Elektret-Filament erhalten; deren in nC/g ausgedrückte massebezogene Elektretladungen $Q_E$/Masse - jeweils in Abhängigkeit von der Lagerzeit - sind in Tabelle 7 aufgeführt.

**Tabelle 7**

| | Spannung an der Gegenelektrode -2,0 kV | Spannung an der Gegenelektrode +2,0 kV |
|---|---|---|
| Lagerzeit nach dem Spinnen (d) | $Q_E$/Masse (nC/g) | $Q_E$/Masse (nC/g) |
| 0 | 0,16 | 0,17 |
| 2 | 0,09 | 0,11 |
| 8 | 0,12 | 0,03 |
| 20 | 0,14 | 0,005 |
| 50 | 0,17 | 0,005 |
| 100 | 0,15 | 0,005 |
| 200 | 0,14 | 0,005 |

Die in den Beispielen beschriebenen Düsenplatten der Düsen waren jeweils mit einem runden Düsenloch versehen. Es können jedoch auch Düsenplatten mit Düsenlöchern anderer Form verwendet werden, z. B. mit stern- oder dreiecksförmigen Querschnitten. Auch können Düsenplatten mit Düsenlöchern zur Erzeugung von Hohl-Filamenten oder Hohl-Spinnfasern eingesetzt werden.

Nach den Beispielen wurden nur Elektret-Filamente hergestellt. Es liegt jedoch auch im Rahmen der Erfindung, Elektret-Spinnfasern zu erzeugen. Dazu kann man beispielsweise auf die geschmolzene hochmolekulare fadenbildende Substanz nach deren Austritt aus der Düsenöffnung einen Gasstrom hoher Geschwindigkeit einwirken lassen (vergleiche dazu z. B. die FR-A- 2 416 535); das austretende Material wird dadurch so weitgehend verstreckt, daß sich Spinnfasern bilden.

Gemäß der Erfindung lassen sich nicht nur Elektret-Filamente und -Spinnfasern herstellen, sondern auch beispielsweise Elektret-Bändchen.

Die nach der Erfindung erzeugbaren Elektret-Formgebilde lassen sich für viele Zwecke mit Erfolg einsetzen. So können erfindungsgemäße Elektret-Filamente und -Spinnfasern zur Filtration, beispielsweise für Tabakrauchfilter, Luftfilter, Filter für Mund- und Nasenmasken oder Filter für Heiz- und Klimaanlagen, verwendet werden.

Um die Filterwirksamkeit eines Filters aus den erfindungsgemäßen Elektret-Filamenten zu prüfen, wurde von den nach Beispiel 1 hergestellten Polypropylen-Elektret-Filamenten ausgegangen. Zum Vergleich wurde ein Nicht-Elektret-Filament aus Polypropylen verwendet, das wie in Beispiel 1 ersponnen wurde, ohne daß jedoch die Elektrode 2 mit Spannung versehen war. Von diesen mit resp. 0 kV, -2,0 kV und -3,8 kV Spannung ersponnenen Polypropylen-Filamenten wurden nach 7-tägiger Lagerzeit nach dem Spinnen jeweils Stränge von parallel liegenden Filamenten gebildet; diese Filamentstränge wurden - längs - in Glasröhrchen von 8 mm Innendurchmesser eingezogen und auf 20 mm Länge - entsprechend der jeweiligen Länge der Glasröhrchen - abgeschnitten. Diese so hergestellten Filter wurden bei gleicher Anströmgeschwindigkeit auf den gleichen Luftwiderstand, nämlich 80 mm Wassersäule, selektioniert. Durch diese ausgewählten Filter mit gleichem Luftwiderstand wurde ein definiertes Luft-Aerosol geleitet. Danach wurden die Aerosol-Mengen bestimmt. Die Ergebnisse sind in Tabelle 8 aufgeführt.

Tabelle 8

| Spannung an der Elektrode (in kV) | 0 | -2,0 | -3,8 |
|---|---|---|---|
| Elektretladung $Q_E$ (in nC) | 0 | 3,0 | 3,4 |
| Filterlänge (in mm) | 20 | 20 | 20 |
| Filterinnendurchmesser (in mm) | 8 | 8 | 8 |
| Filamentmasse im Filter (in mg) | 560 | 529 | 509 |
| Luftwiderstand des Filters (in mm Wassersäule) | 80 | 80 | 80 |
| Mittlere Anströmgeschwindigkeit des Aerosols (im $\frac{m}{s}$) | 0,35 | 0,35 | 0,35 |
| Aerosolgehalt (in mg) : nach dem Filter im Filter | 17,1 4,9 | 16,1 5,9 | 15,0 7,0 |

Wie aus Tabelle 8 deutlich hervorgeht, besitzen Filter aus den erfindungsgemäßen Elektret-Filamenten eine wesentlich bessere Filterwirksamkeit als ein Vergleichsfilter ohne Elektreteigenschaften.

Um die Wasseraufnahmefähigkeit der erfindungsgemäßen Elektret-Filamente zu prüfen, wurde von dem nach Beispiel 1 mit -3,8 kV Spannung hergestellten Folypropylen-Elektret-Filament ausgegangen. Zum Vergleich wurde ein Nicht-Elektret-Filament aus Polypropylen verwendet, das wie in Beispiel 1 ersponnen wurde, ohne daß jedoch die Elektrode 2 mit Spannung versehen war.

Von diesen mit resp. 0 kV und -3,8 kV Spannung ersponnenen Filamenten wurden nach 370-tägiger Lagerzeit nach dem Spinnen jeweils Bündel gebildet (die 370-tägige Lagerung war in trockener Atmosphäre erfolgt).

Die Bündel aus Polypropylen-Filamenten wurden in einer Wasserdampfatmosphäre (relative Feuchte: 100 %) auf einem geerdeten Lochblech gelagert. Die Wasseraufnahme (in Prozent) der Bündel wurde gravimetrisch ermittelt. Die Ergebnisse sind in Tabelle 9 aufgeführt.

Tabelle 9

| | Wasseraufnahme (in %) |
|---|---|
| Nicht-Elektret-Filament | 0,2 |
| Elektret-Filament mit $Q_E$/Masse von 0,31 nC/g | 5,6 |

Die Tabelle 9 zeigt in eindrucksvoller Weise die hohe Wasseraufnahmefähigkeit der erfindungsgemäßen Elektret-Filamente.

Die mit der Erfindung erzielten Vorteile gegenüber dem Stand der Technik sind die folgenden:

- Mit dem erfindungsgemäßen Verfahren und der erfindungsgemäßen Vorrichtung braucht man zur Elektret-Bildung eine geringere elektrische Spannung als mit den bekannten Verfahren und Vorrichtungen zur entsprechenden kontinuierlichen Herstellung von Elektreten;

- mit dem erfindungsgemäßen Verfahren und der erfindungsgemäßen Vorrichtung ist das Einbringen einer elektrischen Ladung in das Innere der Formgebilde leichter zu bewerkstelligen als mit den bekannten Verfahren und Vorrichtungen;

- mit dem Verfahren und der Vorrichtung nach der Erfindung ist eine richtige Dosierung und Zentrierung der elektrischen Ladungen besser möglich als mit den bekannten Verfahren und Vorrichtungen. So ist es nach der Erfindung leicht, die gewünschte Elektronen-Anreicherung oder -Verarmung entlang der Längsachse der Filamente, Spinnfasern oder Bändchen zu erreichen;

- mit dem Verfahren und der Vorrichtung nach der Erfindung wird die für das Schmelzen der hochmolekularen fadenbildenden Substanzen notwendige Wärme unmittelbar und vollständig auch zur Elektret-Herstellung ausgenutzt.

## Patentansprüche

1. Verfahren zur Herstellung von Elektret-Filamenten, -Spinnfasern oder -Bändchen aus hochmolekularen fadenbildenden Substanzen durch Schmelze, dieser hochmolekularen fadenbildenden Substanzen und Auspressen dieser Erschmolzenen Substanzen durch Düsenöffnungen, elektrisches Aufladen, entweder mit negativem oder mit positivem Vorzeichen, und elektrisches Polarisieren zur Erzeugung eines von den gebildeten Filamenten, Spinnfasern oder Bändchen ausgehenden stabilen elektrischen Feldes und Abkühlen der gebildeten Filamente, Spinnfasern oder Bändchen, dadurch gekennzeichnet, daß das elektrische Aufladen, entweder mit negativem oder mit positivem vorzeichen, und das elektrische Polarisieren zur Erzeugung eines von den gebildeten Filamenten, Spinnfasern oder Bändchen ausgehenden stabilen elektrischen Feldes unmittelbar vor dem Austritt der hochmolekularen fadenbildenden Substanzen aus den Düsenöffnungen an diesen sich dann in geschmolzenem Zustand befindlichen hochmolekularen fadenbildenden Substanzen vorgenommen wird.

2. Verfahren nach Anspruch 1, dadurch gekennzeichnet, daß jedes bzw. jede der gebildeten Filamente, Spinnfasern oder Bändchen unmittelbar nach seinem bzw. ihrem Austritt aus der Düsenöffnung einem elektrischen Feld ausgesetzt wird. das auf die in bzw. auf den Filamenten, Spinnfasern oder Bändchen vorhandenen Träger einer elektrischen Ladung eine Kraft senkrecht und in Richtung zur jeweiligen Längsachse der Filamente, Spinnfasern oder Bändchen ausübt.

3. Verfahren nach Anspruch 2, dadurch gekennzeichnet, daß die gebildeten Filamente. Spinnfasern oder Bändchen gleichzeitig abgekühlt werden.

4. vorrichtung zur Durchführung des Verfahrens nach Anspruch 1 mit einer Einrichtung zum Schmelzen der hochmolekularen fadenbildenden Substanzen, mit einer Düse mit Düsenöffnungen, mit einer Einrichtung zum elektrischen Aufladen und Polarisieren und mit einer Anordnung zum Abkühlen der gebildeten Filamente, Spinnfasern oder Bändchen, gekennzeichnet durch folgende Merkmale:

1. die Einrichtung zum elektrischen Aufladen und polarisieren besteht

1.1. entweder aus einer mit einer Spitze (1) oder mit mehreren Spitzen (1) versehenen Elektrode (2), die abgesehen von ihrer Spitze (1) bzw. ihren Spitzen (1) mit einem elektrisch isolierenden und gegenüber den innerhalb der Düse (3) herrschenden Bedingungen stabilen Material überzogen bzw. umgeben ist, wobei jeweils eine Spitze (1) innerhalb der Düse (3) unmittelbar vor einer Düsenöffnung (4) angebracht ist oder in eine Düsenöffnung (4) hineinragt, und wobei ferner die Elektrode (2) mit einem Ausgang (5) einer elektrischen Energiequelle (6) verbunden, und der andere Ausgang (7) dieser elektrischen Energiequelle (6) mit Erde verbunden ist,

1.2. oder aus einer mit einer Spitze (8) oder mit mehreren Spitzen (8) versehenen Elektrode (9), die vollständig mit einem elektrisch isolierenden und gegenüber den innerhalb der Düse (3) herrschenden bedingungen stabilen Material überzogen bzw. umgeben ist, wobei jeweils eine Spitze (8) innerhalb der Düse (3) unmittelbar vor einer Düsenöffnung (4) angebracht ist oder in eine Düsenöffnung (4) hineinragt, und aus einer nicht mit einem elektrisch isolierenden Material überzogen bzw. umgebenen und innerhalb der Düse (3) nicht unmittelbar vor den Düsenöffnungen (4) angebrachten oder in die Düsenöffnungen (4) hineinragenden Gegenelektrode (10), wobei die elektrisch isolierte Elektrode (9) mit dem einen Ausgang (5) einer elektrischen Energiequelle (6) und die elektrisch nicht isolierte Gegenelektrode (10) mit dem anderen Ausgang (7) dieser elektrischen Energiequelle (6) verbunden sind, und wobei ferner der Ausgang (5) der elektrischen Energiequelle (6), mit dem die elektrisch isolierte Elektrode (9) verbunden ist, auch mit Erde verbunden ist.

2. die Düsenplatte (11), in der sich die Düsenöffnungen (4) befinden, oder die gesamte Düse (3) besteht

2.1. entweder aus einem elektrisch isolierenden und gegenüber den innerhalb der Düse (3) herrschenden Bedingungen stabilen Material

2.2. oder aus einem elektrisch leitenden und gegenüber den innerhalb der Düse (3) herrschenden Bedingungen stabilen Material, wobei

2.2.1. die Düsenplatte (11) oder die gesamte Düse (3) dann gegenüber Erde elektrisch isoliert ist.

5. Vorrichtung nach Anspruch 4, dadurch gekennzeichnet, daß sich auf der Austrittsseite der Düse (3) direkt anschliessend an jede Düsenöffnung (4) und achszentriert mit dieser, jedoch ohne in unmittelbarem Kontakt mit der Düse (3) stehend, jeweils ein aus elektrisch leitendem Material bestehender Hohlzylinder (12) befindet. wobei diese Hohlzylinder (12) mit einem Ausgang (13) einer elektrischen Energiequelle (14) verbunden sind, und wobei ferner der andere Ausgang (15) der elektrischen Energiequelle (14) mit Erde verbunden ist.

6. Vorrichtung nach Anspruch 5, dadurch gekennzeichnet, daß die sich auf der Austrittsseite der Düse (3) befindlichen Hohlzylinder (12) so ausgebildet sind, daß sie gleichzeitig als Anordnung zum Abkühlen der gebildeten Filamente, Spinnfasern oder Bändchen dienen.

## Claims

1. A method for the production of electret filaments, fibres or tapes from high molecular weight thread forming substances by melting these high molecular weight thread forming substances and extruding these molten substances through die orifices, electrically charging either with a negative or a positive sign and electric polarisation for the production of a stable electric field originating from the formed filaments, fibres or tapes and cooling the formed filaments, fibres or tapes, characterised in that the electric charging with either a negative or a positive sign and the electric polarisation for the production of a stable electric field originating from the formed filaments, fibres or tapes is effected immediately prior to the emergence of the high molecular weight thread forming substances from the die orifices on these high molecular weight thread forming substances, which are then in a molten state.

2. A method according to claim 1, characterised in that each of the formed filaments, fibres or tapes is exposed immediately after its, or their, emergence from the die orifice to an electric field which exerts a force on the electric charge carriers present in or on the filaments, fibres or tapes perpendicular to, and in the direction of the respective longitudinal axis of the filaments, fibres or tapes.

3. A method according to claim 2, characterised in that the formed filaments, fibres or tapes are simultaneously cooled.

4. An apparatus for the execution of the method according to claim 1 with a device for the melting of the high molecular weight thread forming substances, with a die with die orifices, with a device for electrically charging and polarising and with an arrangement for cooling the formed filaments, fibres or tapes, characterised by the following features:

1. the device for the electric charging and polarisation consists of

1.1. either an electrode (2) provided with one point (1) or with several points (1) which, apart from its or their point(s) (1) is coated or surrounded with an electrically insulating material which is stable to the conditions prevailing inside the die (3), one point (1) being respectively disposed inside the die (3) directly in front of the die orifice (4) or protruding into a die orifice (4), the electrode (2) being moreover connected to a terminal (5) of a source of electrical energy (6) and the other terminal (7) of this electrical energy source (6) being grounded, 1.2. or an electrode (9) provided with one point (8) or several points (8) which is completely coated or surrounded with an electrically insulating material which is stable to the conditions prevailing inside the die (3), one point (8) being respectively disposed inside the die (3) directly in front of the die orifice (4) or protruding into a die orifice (4), and of a counter-electrode (10) which is not coated or surrounded with an electrically insulating material and which is disposed within the die (3) not directly in front of the die orifices (4) nor protruding into the die orifices (4), the electrically insulated electrode (9) being connected to one terminal (5) of an electrical energy source (6) and the electrically uninsulated counter-electrode (10) to the other terminal (7) of this electrical energy source (6), and moreover, the terminal (5) of the electrical energy source to which the electrically insulated electrode (9) is connected, also being grounded,

2. the die plate (11) wherein the die orifices (4) are located or the entire die (3) consists of

2.1. either an electrically insulating material and stable to the conditions prevailing inside the die (3)

2.2. or of an electrically conductive material and stable to the conditions prevailing inside the die (3).

2.2.1. the die plate (11) or the entire die (3) then being electrically insulated from the ground.

5. An apparatus according to Claim 4, characterised in that on the exit side of the die (3), there is located directly contiguous to each die orifice (4) and axially centred therewith, but without being in direct contact with the die (3) respectively one hollow cylinder (12) consisting of electrically conductive material, this hollow cylinder (12) being connected to one terminal (13) of an electrical energy source (14) and the other terminal (15) of the electrical energy source (14) being, moreover, grounded.

6. An apparatus according to Claim 5, characterised in that the hollow cylinders (12) located on the exit side of the die (3) are designed in such a way that they simultaneously serve as an arrangement for cooling the formed filaments, fibres or tapes.

## Revendications

1 - Procédé pour la fabrication de filaments, fibres filées ou bandelettes d'électret en substances de haut poids moléculaire formatrices de fibres par fusion de ces substances de haut poids moléculaire formatrices de fibres et expulsion de ces substances fondues par des orifices de filière, création d'une charge électrique de signe soil négatif, soit positif, création d'une polarisation électrique pour l'établissement d'un champ électrique stable émanant des filaments fibres filées ou bandplettes formés et refroidissement des filaments, fibres filées ou bandelettes formes caractérisé en ce que la création de la charge électrique de sigme soit négatif, soit positif et la création de la polarisation électrique pour l'établissement d'un champ électrique stable émanant des filaments, fibres filées ou bandelettes formés sont exécutées immédiatement avant la sortie des substances de haut poids moléculaire formatrices de fibres hors des orifices de filière sur ces substances de haut poids moléculaire formatrices de fibres se trouvant alors à l'état fondu.

2 - Procédé suivant la revendication 1, caractérisé en ce que chacun des filaments, fibres filées ou bandelettes formés est exposé immédiatement après sa sortié hors de l'orifice de filière à un champ électrique qui exerce sur les porteurs d'une charge électrique présents sur ou dans les filaments, fibres filérs ou bandelettes, une force perpendiculaire et en direction de l'axe longitudinal des filaments, fibres filées ou bandelettes.

3 - Procédé suivant la revendication 2, caractérisé en ce que les filaments, fibres filées ou bandelettes formés sont en même temps refroidis.

4 - Appareil pour l'exécution du procédé suivant la revendication 1 comprenant un équipement pour la fusion des substances de haut poids moléculaire formatrices de fibres, une filière à orifices de filière, un équipement pour créer une charge et une polarisation électriques et un dispositif pour refroidir les filaments, les fibres filées ou les bandelettes formes caractérisé par les particularités suivantes:

1. l'équipement pour la création d'une charge ou d'une polarisation électrique consiste

1.1. soit en une électrode (2) pourvue d'une pointe (1) ou de plusieurs pointes (1) qui, abstraction faite de sa pointe (1) ou de ses pointes (1), est recouverte ou entourée d'une manière électriquement isolante et stable à l'égard des conditions régnant à l'intérieur de la filière (3), la ou chaque pointe (1) étant agencée à l'intérieur de la filière (3) immédiatement devant un orifice de filière (4) ou pénétrant dans un orifice de filière (4) et l'électrode (2) étant en outre connectée à une sortie (5) d'une source d'énergie électrique (6), tandis que l'autre sortie (7) de cette source d'énergie électrique (6) est mise à la terre,

1.2. soit en une électrode (9) pourvue d'une pointe (8) ou de plusieurs pointes (8) qui est complètement recouverte ou entouré d'une matière électriquement isolante stable à l'égard des conditions régnant à l'intérieur de la filière (3), la ou chaque pointe (8) étant agencée à l'intérieur de la filière (3) immédiatement devant un orifice de filière (4) ou pénétrant dans un orifice de filière (4), et en une contre-électrode (10) non revetur ou entourée d'une matière electriquement isolante et agencée à l'interieur de la filière (3) non immédiatement devant les orifices de filière (4) et dans pénétration dans les orifices de filière (4), et l'électrode (9) isolée électriquement étant connectée à une sortie (5) d'une source d'énergie électrique (6) et la contre-électrode (10) non isolée électriquement étant connectée à l'autre sortie (7) de cette source d'énergie électrique (6) la sortie (5) de la source d'énergie électrique (6) qui est connectée à l'électrode isolée (9) électriquement étant en outre aussi mise à la terre,

2. la plaque de filière (11) dans laquelle se trouvent les orifices de filière (4) ou bien la filière (3) complète consiste

2.1. soit en une matière électriquement isolante et stable à l'égard des conditions régnant à l'intérieur de la filière (3)

2.2. soit en une matière électriquement conductrice et stable à l'égard des conditions régnant à l'intérieur de la filière (3)

2.2.1. la plaque de filière (11) ou la filière complète (3) étant dans ce cas électriquement isolée à l'égard de la terre.

5 - Appareil suivant la revendication 4, caractérisé en ce qu'un cylindre creux (12) consistant en une matière électriquement conductrice se trouve du côté de la sortie de la filière (3) en succession directe de chaque orifice de filière (4) et axialement centré sur celui-ci, mais sans contact immédiat avec la filière (3), ces cylindres creux (12) étant connectés avec une sortie (13) d'une source d'énergie électrique (14) tandis que l'autre sortie (15) de la source d'énergie électrique (14) est mise à la terre.

6 - Appareil suivant la revendication 5, caractérisé en ce que les cylindres creux (12) se trouvant du côté de la sortie de la filière (3) sont conformés de manière à servir simultanément de dispositifs pour le refroidissement des filaments, fibres filées ou bandelettes formés.

Fig. 1

18  2  16  18

3

0 090 062

4  1  11  17

6  7  5

Fig.2

Fig.3

Fig.4

Fig.5

0 090 062